Europäisches Patentamt

European Patent Office

Office européen des brevets

(11) Publication number: **0 029 314**
**B1**

## EUROPEAN PATENT SPECIFICATION

(45) Date of publication of patent specification: **20.07.83**

(51) Int. Cl.³: **F 16 L 3/22, F 16 B 7/08**

(21) Application number: **80303843.9**

(22) Date of filing: **29.10.80**

(54) Clamping device.

(30) Priority: **01.11.79 GB 7937812**

(43) Date of publication of application:
**27.05.81 Bulletin 81/21**

(45) Publication of the grant of the patent:
**20.07.83 Bulletin 83/29**

(84) Designated Contracting States:
**DE FR GB**

(56) References cited:
**DE - B - 1 077 285**
**DE - B - 1 960 542**
**DE - C - 529 514**
**US - A - 2 227 528**

(73) Proprietor: **Babcock Power Limited**
**Maypole House 128-132, Borough High Street**
**London SE1 4YB (GB)**

(72) Inventor: **Champman, John Edward**
**134, Salmons Lane**
**Whyteleafe Surrey (GB)**
Inventor: **Hawkins, Ronald James**
**24 Links Avenue**
**Morden Surrey (GB)**

(74) Representative: **Lewis, David Overington**
**c/o Babcock International Ltd. Cleveland House**
**19 St. James's Square**
**London SW1Y 4LN (GB)**

Courier Press, Leamington Spa, England

Clamping device

This invention relates to clamping devices, and in particular to clamping devices for tubes or pipes which are immersed in or carry fluid at elevated temperature for example, boilers.

German Patent No. 529514 discloses a holder for connecting and holding rod shaped objects. The holder includes two halves with curved ends, the halves being held together through a central portion by a stud which passes through each half the stud having associated at each side thereof a spring which bears against the central portion and the head of the stud, thus if one half of the holder is compressed the other half opens accordingly.

German Auslegeschrift 1960542 discloses a sound proofed pipe holder having two halves clamped together. The pipe holder is further connected to a stirrup holder which is resiliently connected to the pipe holder by non-metallic members.

Previously clamping devices for use at elevated temperatures and/or in hazardous environments have, when subjected to vibration or corrosion build up and loss which can occur under such conditions, been damaged or have damaged the tubes or pipes which are supported thereby due to the prevention of relative movement between the clamping device and the tubes or pipes and a support. In order to overcome the problem, a resilient means has been incorporated into the proposed clamping device such that the clamping device can accommodate to vibration or corrosion build up or loss whilst maintaining support of the tubes or pipes, by allowing relative movement of the clamping device with respect to the tubes or pipes and to a support.

According to the invention there is provided a clamping device for tubes and pipes in which the clamping device includes a pair of plate members (1, 2, 20, 21) having bores (6, 25), a securing member (12, 29) connecting together the plate members (1, 2, 20, 21) through the bores (6, 25) each securing member having associated therewith a spring (13, 36) allowing movement of the plate members (1, 2, 20, 21) with respect to each other and to the securing member (12, 29), characterized in having a plurality of securing members (12, 29) extending through spaced bores (6, 25) and a retaining member (8, 30) securing one of the pair of plate members (1, 2, 20, 21) to a support (10, 33), the retaining member having associated therewith a spring washer (13, 36) allowing movement of the plate members (1, 2, 20, 21) with the respect to the support (10, 33).

Embodiments of the invention will now be described by way of example, with reference to the accompanying drawings in which:—

Figure 1 is an exploded isometric project of a pair of saddles forming part of one embodiment of a clamping device:

Figure 2 is a side elevation of the clamping device shown in Figure 1 depicting the saddles connected together by bolts clamping tube lengths of a helical tube bank to a portion of a support arm;

Figure 3 is a cross sectional end elevation on the line III—III of Figure 2;

Figure 4 is an isometric projection of one of a pair of saddles forming part of a second embodiment of a clamping device.

Figure 5 is an isometric projection of the other one of a pair of saddles forming part of the second embodiment of the clamping device;

Figure 6 is a side elevation of the clamping device shown in Figures 4 and 5 positioned on tube lengths of a helical tube bank, supported on a portion of a support arm;

Figure 7 is a cross sectional end elevation taken along the line VII—VII of Figure 6; and

Figure 8 is a cross sectional view taken along the line VIII—VIII of Figure 6.

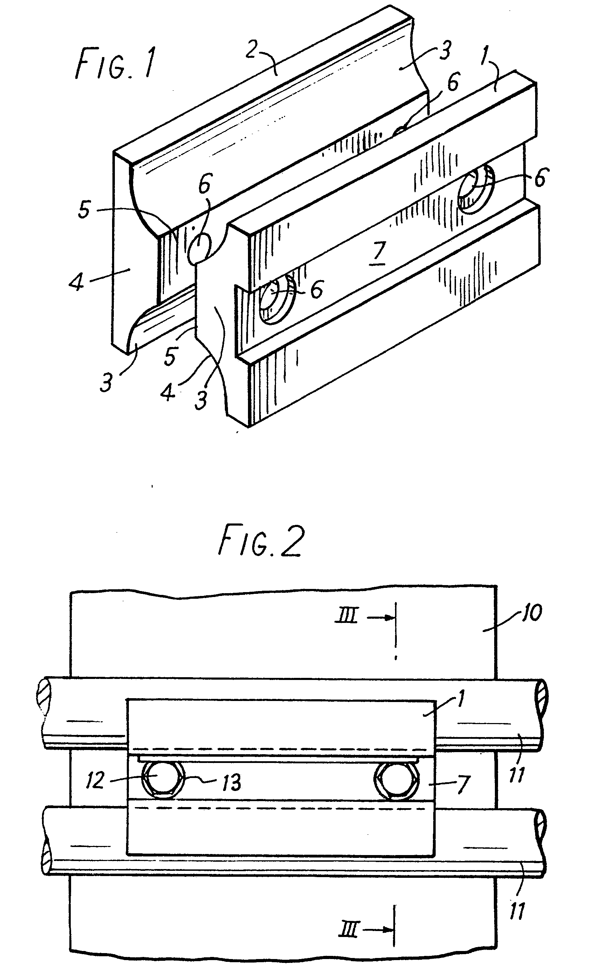

In the embodiment shown in Figures 1 to 3 a clamping device includes a pair of saddles 1 and 2 each having part cylindrical faces 3 extending between a parallelepiped portion 4 and a central land 5.

Each saddle is drilled to provide spaced registering bores 6 on the central land 5, the bores 6 through the saddle 1 emerge at a face remote from the central land 5 at a longitudinal groove 7 whilst the bores 6 through the saddle 2 are counter-bored and threaded remote from the central land 5.

On assembly, during the operation of coiling the helical tube lengths, nuts 8 threaded both internally and externally are passed through apertures 9 in support arms 10 mounted on a central core (not shown) to mate with threaded bores of the saddle 2. Next helical tube lengths 11 are coiled onto the saddles 2, after which bolts 12 are passed through the bores 6 in the saddles 1 and 2 to mate with the nuts 8. Spring washers 13 are respectively interposed between heads of the bolts 6 and the saddle 1 and between heads of the nuts 8 and the support arms 10.

In operation, the tube lengths are supported by the part cylindrical faces 3 of the saddles 1 and 2 and maintained adjacent to the support arms 10 by the nuts 8 mating with the bolts 12. When vibration occurs along the tube lengths the saddles 1 and 2 move with respect to the support arms 10 due to the aperture 9 being of a larger diameter than that of the external diameter of the nuts 8, whilst maintaining support of the tube lengths.

Similarly the resilience of spring washers 13 allow for movement of the saddles 1 and 2 with respect to each other whilst supporting the tube lengths 11.

In addition the resilience of the spring washers 13 allow the saddles 1 and 2 to accommodate to build up of corrosion around the tube lengths 11 and support arms 10 when the tube lengths are used at an elevated temperature and/or in a hazardous environment, such support of the tubes is maintained without damage to the clamping device or tube lengths. Also if the corrosion build up falls from the tube lengths or support arms, the tension in the spring washers 13 will cause the saddles 1 and 2 to move toward each other whilst support of the tube length is maintained.

It should be appreciated that the number and resilience of the spring washers is selected to suit the loading required on the clamping device, and on the clamping device to support arm connection.

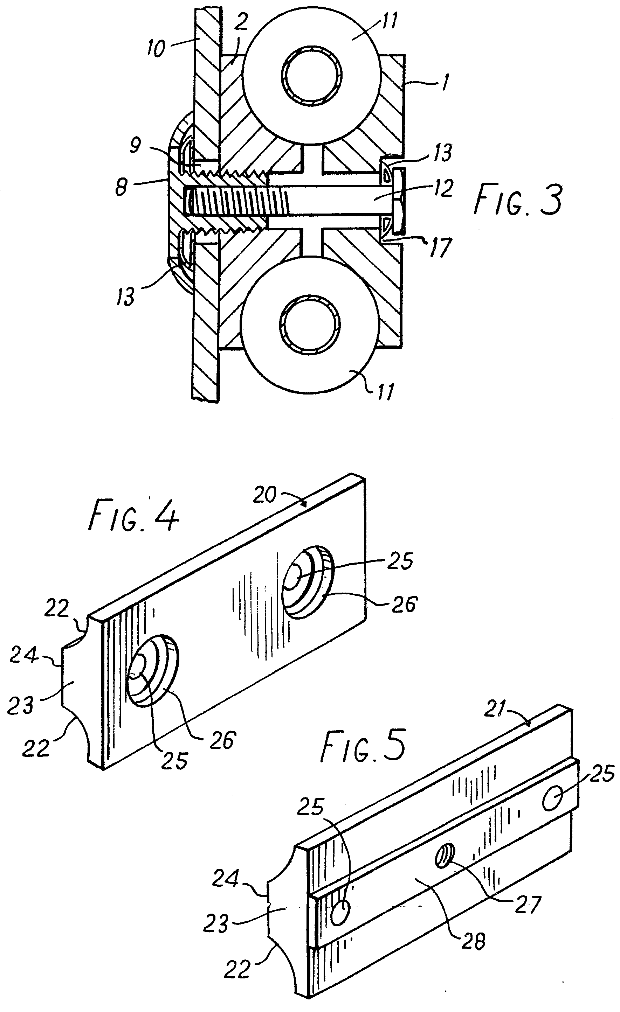

It should also be appreciated that locking strips 14 and 15 shown in Figures 2 and 3 may be inserted to co-act with the heads of the nuts 8 and the bolts 12 to prevent rotation of the nuts and bolts once they are correctly positioned. Alternatively welds can be used to secure the heads of nuts 8 and the bolts 12, instead of the locking strips.

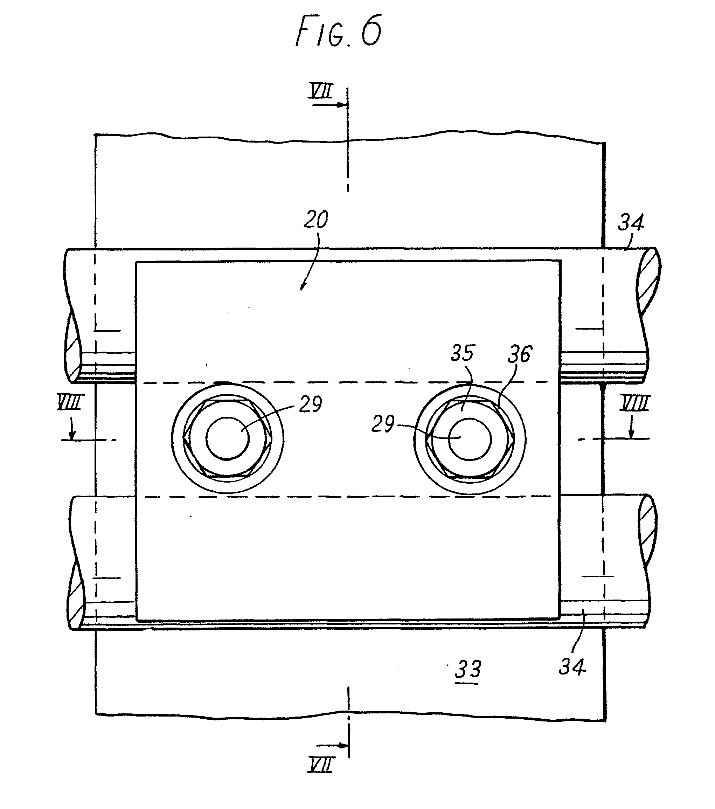

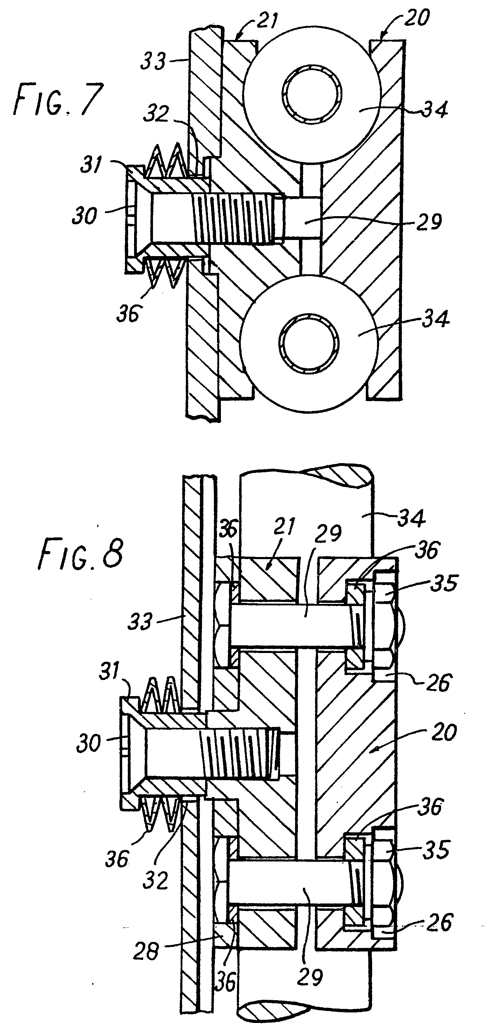

In the embodiment shown in Figures 4 to 8 a clamping device includes a pair of saddles 20 and 21 each having part cylindrical faces 22 extending between a parallelepiped portion 23 and a central land 24.

Each saddle is drilled to provide spaced registering bores 25 on the central land 24. The bores 25 through the saddle 20 emerge at stepped recesses 26 on a face remote from the central land 24, whilst the bores 25 through the saddle 21 emerge at a raised region 28 remote from the central land 24.

The saddle 21 is also provided with a threaded bore 27, between the bores 25, which is of a larger diameter than the bores 25, and which emerges at the raised region 28 remote from the central land 24.

On assembly, during the operation of coiling the helical tube lengths, bolts 29 are passed through the bores 25 in the saddle 21 and a screw 30 and spacer 31 are passed through an aperture 32 in support arm 33 mounted on a central core (not shown) so that the screw 30 mates with the bore 27 of the saddle 21 and the region 28 engages with a groove in the support arm 33. Next helical tube lengths 34 are coiled onto the saddle 21 after which the bolts 29 are passed through the bores 25 of the saddle 20 to mate with nuts 35.

Spring washers 36 are respectively interposed between the heads of the bolts 29 and the saddle 21; and the nuts 35 and the saddle 20; and the screw 30 and spacer 31 and the support arms 33. The spring washers 36 interposed between the nuts 35 and the saddle 20 are accommodated within the stepped recess 26.

In operation, the tube lengths 34 are supported by the cylindrical faces 22 of the saddles 20 and 21 and maintained adjacent to the support arms 33 by the screws 30 mating with the threaded bore 27 of the saddle 21 and by the region 28 engaging with the groove in the support arm 33. If vibration occurs along the tube lengths 34 the saddles 20 and 21 move with respect to the support arm 33, due to the aperture 32 being of a greater diameter than the spacer 31, whilst support of the tube lengths is maintained by the action of the spring washers 36 associated with the screw and spacer 30 and 31.

In addition the resilience of the spring washers 36 associated with bolts 29 and nuts 35 allow the saddles 20 and 21 to move with respect to each other whilst still maintaining support of the tube lengths 34.

Further the resilience of the spring washers 36 allow the clamping device shown in Figures 4—8 to accommodate to a build up of corrosion and corrosion loss when the tube lengths are used at an elevated temperature and/or in a hazardous environment such that support of the tube lengths is maintained without the clamping device or tube lengths being damaged. Corrosion build up can occur between the tube lengths 34 and the saddles 20 and 21, and between the saddle 21 and the support arm 33. Corrosion build up and loss is accommodated for in respect of the tube lengths 34 and the saddles 20 and 21 by the spring washers 36 associated with the bolts 29 and the nuts 35. Similarly corrosion build up and loss is accommodated for in respect of the saddle 21 and the support arm 33 by the spring washers 36 associated with the screw 30 and spacer 31.

It should be appreciated that the numbers and resilience of the spring washers is selected to suit the loading required on the clamping device, and on the clamping device to support arm connection.

**Claims**

1. A clamping device for a plurality of tubes and pipes in which the clamping device includes a pair of plate members (1, 2, 20, 21) having bores (6, 25), a securing member (12, 29) connecting together the plate members (1, 2, 20, 21) through the bores (6, 25) each securing member having associated therewith a spring (13, 36) allowing movement of the plate members (1, 2, 20, 21) with respect to each other and to the securing member (12, 29), characterized in having a plurality of securing members (12, 29) extending through spaced bores (6, 25) and a retaining member (8, 30) securing one of the pair of plate members (1, 2, 20, 21) to a support (10, 33), the retaining member having associated therewith a spring washer (13, 36) allowing movement of the plate members (1, 2, 20, 21) with respect to the support (10, 33).

2. A clamping device for a plurality of tubes and pipes as claimed in claim 1, characterized in that the retaining member (8, 30) includes an externally and internally threaded portion (8) which respectively engages with one of the pair of plate members (1, 2, 20, 21) and with a portion of the securing members (12, 29).

3. A clamping device for a plurality of tubes and pipes as claimed in claim 1 or claim 2, characterized in that the pair of plate members (1, 2, 20, 21) include a block portion (4, 23) in which a plurality of parallel grooves extend, the grooves being spaced apart by a central land (5, 24) containing the spaced bores (6, 25).

**Revendications**

1. Dispositif de serrage pour une pluralité de tubes et tuyaux, le dispositif de serrage comportant une paire de pièces-plaques (1, 2, 20, 21) ayant des alésages (6, 25), un élément de fixation (12, 29) reliant les pièces-plaques (1, 2, 20, 21) l'une à l'autre à travers les alésages (6, 25) chaque élément de fixation comportant en association avec lui un ressort (13, 36) permettant aux pièces-plaques (1, 2, 20, 21) de se déplacer l'une par rapport à l'autre et par rapport à l'élément de fixation (12, 29), caractérisé en ce qu'il comporte une pluralité d'éléments de fixation (12, 29) s'étendant à travers des alésages espacés (6, 25) et un élément de retenue (8, 30) fixant l'une des deux pièces-plaques (1, 2, 20, 21) à un support (10, 33), l'élément de retenue comportant en association avec lui une rondelle élastique (13, 36) permettant un déplacement des pièces-plaques (1, 2, 20, 21) par rapport au support (10, 33).

2. Dispositif de serrage pour une pluralité de tubes et tuyaux selon la revendication 1, caractérisé en ce que l'élément de retenue (8, 30) comporte une partie (8) à filetage et taraudage coopérant respectivement avec l'une des deux pièces-plaques (1, 2, 20, 21) et avec une partie des éléments de fixation (12, 29).

3. Dispositif de serrage pour une pluralité de tubes et tuyaux selon la revendication 1 ou 2, caractérisé en ce que les deux pièces-plaques (1, 2, 20, 21) comportent une partie formant bloc (4, 23) dans lesquelles s'étendent une pluralité de gorges parallèles, les gorges étant espacées l'une de l'autre par un plat médian (5, 24) contenant les alésages espacés (6, 25).

**Patentansprüche**

1. Klemmeinrichtung für eine Mehrzahl von Leitungen und Rohren, mit zwei Platten (1, 2, 20, 21), welche Bohrungen (6, 25) aufweisen, mit einem Befestigungsteil (12, 29), welche die Platten (1, 2, 20, 21) durch die Bohrungen (6, 25) miteinander verbinden und denen jeweils eine Feder (13, 36) zugeordnet ist, welche die Bewegung der Platten (1, 2, 20, 21) zueinander und zu dem Befestigungsteil (12, 29) ermöglichen, dadurch gekennzeichnet, daß sich eine Mehrzahl von Befestigungsteilen (12, 29) durch die — im Abstand voneinander angeordneten — Bohrungen (6, 25) erstreckt und daß ein Halteteil (8, 30) eines der beiden Platten (1, 2, 20, 21) an einem Träger (10, 33) befestigt und eine zugeordnete Ringfeder (13, 36) aufweist, welche eine Bewegung der Platten (1, 2, 20, 21) mit Bezug auf den Träger (10, 33) ermöglichen.

2. Klemmeinrichtung für eine Mehrzahl von Leitungen und Rohren nach Anspruch 1, dadurch gekennzeichnet, daß das Halteteil (8, 30) einen äußeren und inneren Schraubabschnitt (8) aufweist, der jeweils an einem der beiden Platten (1, 2, 20, 21) bzw. an einem Abschnitt des Befestigungsteils (12, 29) angreift.

3. Klemmeinrichtung für eine Mehrzahl von Leitungen und Rohren nach Anspruch 1 oder 2, dadurch gekennzeichnet, daß die beiden Platten (1, 2, 20, 21) einen blockartigen Abschnitt (4, 23) besitzen, in welchem sich eine Mehrzahl von parallelen Nuten erstreckt, wobei die Nuten durch ein zentrales Feld (5, 24) voneinander getrennt sind, welche die in Abstand voneinander angeordneten Bohrungen (6, 25) enthalten.

FIG. 1

2 3 1 6 6 5 6 4 7 5 6 3 5 4 3

FIG. 2

III → 10
12 13 7 1 11
III → 11

FIG. 3

FIG. 4

FIG. 5

# FIG. 6

FIG. 7

FIG. 8